# EUROPEAN PATENT SPECIFICATION

(11) **EP 4 403 911 B1**
(45) Date of publication and mention of the grant of the patent: **06.05.2026**
(21) Application number: 24153527.7
(22) Date of filing: 23.01.2024
(51) Int. Cl.: G01N 27/624, H01J 49/00

(54) **TANDEM DIFFERENTIAL MOBILITY ION MOBILITY SPECTROMETRY**
TANDEM-IONENMOBILITÄTSSPEKTROMETRIE MIT DIFFERENZIELLER MOBILITÄT
SPECTROMÉTRIE DE MOBILITÉ IONIQUE À MOBILITÉ DIFFÉRENTIELLE EN TANDEM

(30) Priority: 23.01.2023 US 202363440454 P
(43) Date of publication of application: 24.07.2024
(73) Proprietor: Hamilton Sundstrand Corporation, Charlotte, NC 28217-4578 (US)
(72) Inventor: Gardner, Ben D., Colton,CA 92324 (US); Eicemen, Gary A., Las Cruces, NM 88005 (US); Fowler,Peter, Las Cruces, NM 88003 (US)
(74) Representative: Dehns

(56) References cited:
- US-A1- 2005 040 330
- US-A1- 2005 173 629
- US-A1- 2022 397 552
- MARIO AMO-GONZ�LEZ ET AL: "Ion Mobility Spectrometer-Fragmenter-Ion Mobility Spectrometer Analogue of a Triple Quadrupole for High-Resolution Ion Analysis at Atmospheric Pressure", ANALYTICAL CHEMISTRY, vol. 90, no. 11, 25 April 2018 (2018-04-25), US, pages 6885 - 6892, XP055617282, ISSN: 0003-2700, DOI: 10.1021/acs.analchem.8b01086

## Description

### CROSS-REFERENCE TO RELATED APPLICATIONS

This application claims priority to and the benefit of U.S. Provisional Application No. 63/440,454, filed January 23, 2023.

### TECHNICAL FIELD

The present disclosure relates to differential mobility and ion mobility spectrometry, e.g., for chemical detection.

### BACKGROUND

Mobility spectrometry is a means for determining a chemical identity of an analyte. In the field of remote, unattended chemical sensing, the conventional techniques have been considered satisfactory for their intended purpose. However, there is an ever present need for improved systems and methods for chemical detection that provides higher accuracy with respect to identifying more constituents of the sample, while at the same time providing higher resolution results as compared to prior system. This disclosure provides a solution for this need. US 2022/397552 A1 discloses a molecular identification using field induced fragmentation spectra by reactive stage tandem differential mobility spectrometry.

### SUMMARY

A method for identifying a chemical composition is provided as defined by claim 1.

The method can further include, ionizing the chemical sample using an ionization source to produce an ionized flow prior to performing differential mobility spectrometry on the chemical sample.

Performing differential mobility spectrometry on the chemical sample can further include, subjecting the ionized flow to a first radio frequency field to cause ions within the ionized flow to oscillate, and applying a first voltage differential across the first radio frequency field to cause positive ions within the ionized flow to drift towards a negative charge and negative ions to drift towards a positive charge to separate the positive ions from the negative ions within the ionized flow.

**In** certain embodiments, performing differential mobility spectrometry on the chemical sample further includes, filtering the ions within the fragmented ionized flow to generate the first constituent group such that only the first constituent group passes to an ion mobility spectrometer of the detection system. Applying the first voltage differential can include, progressively modifying the first voltage differential to allow selected ions within the ionized flow and/or the fragmented ionized flow to pass into the ion mobility spectrometer as the first constituent group. The method can include, generating a first data set for the first constituent group based on the first analysis characteristic.

**In** certain embodiments, performing differential mobility spectrometry on the chemical sample further includes, applying a second voltage differential across a second radio frequency field to cause positive ions within the fragmented ionized flow to drift towards a negative charge and negative ions to drift towards a positive charge to separate the positive ions from the negative ions within the fragmented ionized flow. **In** certain such embodiments, differential mobility spectrometry can further include filtering the ions within the fragmented ionized flow to generate the first constituent group such that only the first constituent group passes to an ion mobility spectrometer.

Applying the first voltage differential and/or applying the second voltage differential further includes, progressively modifying the first voltage differential and/or the second voltage differential to allow selected ions within the ionized flow and/or the fragmented ionized flow to pass into the ion mobility spectrometer as the first constituent group, and wherein performing differential mobility spectrometry further comprises, generating a first data set for the first constituent group based on the first analysis characteristic.

Performing ion mobility spectrometry on the first constituent group can further include, passing the ionized flow containing only the first constituent group to an analytical module the ion mobility spectrometer, and applying a voltage differential across the analytical module to draw positive ions with in the first constituent group to a negative charge of a first analytical module of the ion mobility spectrometer and draw the negative ions within the first constituent group to a positive charge of a second analytical module of the ion mobility spectrometer.

Performing ion mobility spectrometry on the first constituent group can further include, separating the ions of first continued group in space and performing a first time of flight analysis on the ions within the first constituent group to allow selected ions within the first constituent group to pass to a fragmenter, and fragmenting the selected ions within the first constituent group to further dissociate and generate additional ion types having distinctive mobility characteristics generating a fragmented flow of ions forming the second constituent group.

Performing ion mobility spectrometry on the first constituent group can further include, performing a second time of flight analysis on the fragmented flow of ions within second constituent group to generate a second data set for the second constituent group based on the second analysis characteristic, correlating the second dataset generated for the second constituent group with the first dataset generated for the first constituent group; and, determining the identity of the chemical composition based on the correlation between the first dataset and the second data set.

A system is provided as defined by claim 7.

The system includes a chemical detector including a chemical analyte inlet, an ionization module having an ionization source therein fluidly connected to the chemical analyte inlet configured to receive the chemical analyte and ionize the chemical analyte to generate an ionized flow, an analytical module fluidly connected to the ionization module to receive the ionized flow and configured to determine a chemical identity of the chemical analyte.

The analytical module includes a differential mobility spectrometer fluidly connected to the chemical analyte inlet and the analytical module also includes an ion mobility spectrometer fluidly connected to the differential mobility spectrometer.

The differential mobility spectrometer includes a first set of electrodes including a first positively charged electrode and a first negatively charged electrode configured to separate positive ions from negative ions within the ionized flow and wherein only ions of a predetermined mobility characteristic flow past the first set of electrodes; and a fragmenter downstream of the first set of electrodes configured to fragment the filtered sample to further dissociate ions within the filtered sample to generate a fragmented ionized flow with additional ion types having distinctive mobility characteristics

The ionization source can be configured to ionize the chemical analyte flowing through ionization region. In certain embodiments, the ionization source can include any one or more of an electric-field ionizer, a radioactive ionizer, or a photo-ionizer.

In certain embodiments, an outlet of the fragmenter can be an outlet of the differential mobility spectrometer such that the fragmented ionized flow forms a first constituent group and passes to the ion mobility spectrometer.

In certain embodiments, the differential mobility spectrometer can include a second set of electrodes including a second positively charged electrode and a second negatively charged electrode downstream of the fragmenter configured to separate positive ions from negative ions within the fragmented ionized flow and ions of a predetermined mobility flow past the second set of electrodes forming a first constituent group, where the first constituent group passes to the ion mobility spectrometer.

In certain embodiments, the differential mobility spectrometer can include a computational module configured to generate a first data set for the first constituent group based on a first analysis characteristic.

According to the invention, the ion mobility spectrometerincludes a first positive ion drift tube and a first negative ion drift tube each fluidly connected to an outlet of the differential mobility spectrometer, wherein the first positive ion drift tube is configured to receive positive ions from the first constituent group and the first negative ion drift tube configured to receive negative ions from the first constituent group.

The ion mobility spectrometer further includes a first shutter at an inlet of the first positive ion drift tube configured to filter the first constituent group entering the first positive ion drift tube based on ion mobility and a second shutter at an inlet of the first negative ion drift tube configured to filter the first constituent group entering the first negative ion drift tube based on ion mobility, wherein the first and second shutter provide selected ions from the first constituent group to the first positive ion drift tube and the first negative ion drift tube.

The ion mobility spectrometer also includes a first fragmenter disposed at an outlet of the first positive ion drift tube and a second fragmenter disposed at an outlet of the first negative ion drift tube configured to fragment the selected ions from the first constituent group to further dissociate the selected ions from the first constituent group to generate the second constituent group with additional ion types having distinctive mobility characteristics.

The ion mobility spectrometer can further include, a positive ion detector at an end of the second positive ion drift tube configured to draw the positive ions and towards the positive ion detector and configured to detect a time of flight of the positive ions of the second constituent group within the second positive ion drift tube and a negative ion detector at an end of the second negative ion drift tube configured to draw the negative ions towards the negative ion detector and configured to detect a time of flight of the negative ions of the second constituent group within the second negative ion drift tube.

In certain embodiments, the ion mobility spectrometer can be two ion mobility spectrometers connected in series.

The analytical module can be configured to determine a drift time of the positive ions of the second constituent group within the second positive ion drift tube and a drift time of the negative ions of the second constituent group in the second negative ion drive tube and generate a second data set for the second constituent group based on the second analysis characteristic.

The analytical module can include a computational module configured to correlate the second dataset generated for the second constituent group with the first dataset generated for the first constituent group; and determine the identity of the chemical analyte based on the correlation between the first dataset and the second data set.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, other embodiments thereof will be described in detail herein below with reference to certain figures, wherein:
Fig. 1 is a schematic diagram of a system in accordance with this disclosure, showing a chemical detection system;
Fig. 2 is an enlarged schematic view of a differential mobility spectrometer of the chemical detection system of Fig. 1;
Fig. 3 is an enlarged schematic view of a portion of an ion mobility spectrometer of the chemical detection system of Fig. 1;
Fig. 4a is an example dataset identifying a chemical composition of an example analyte analyzed in the chemical detector of Fig. 1;
Fig. 4b is an example of a dataset generated after analysis with the ion mobility spectrometer of Fig. 3; and
Fig. 4c is an example of a dataset generated after analysis with the differential mobility spectrometer of Fig. 2.

### DETAILED DESCRIPTION

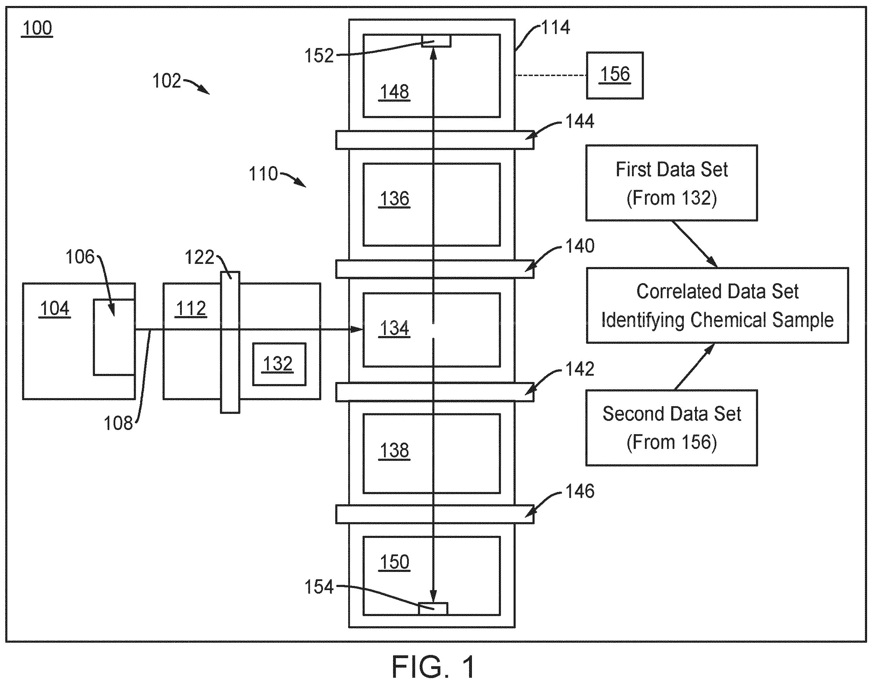

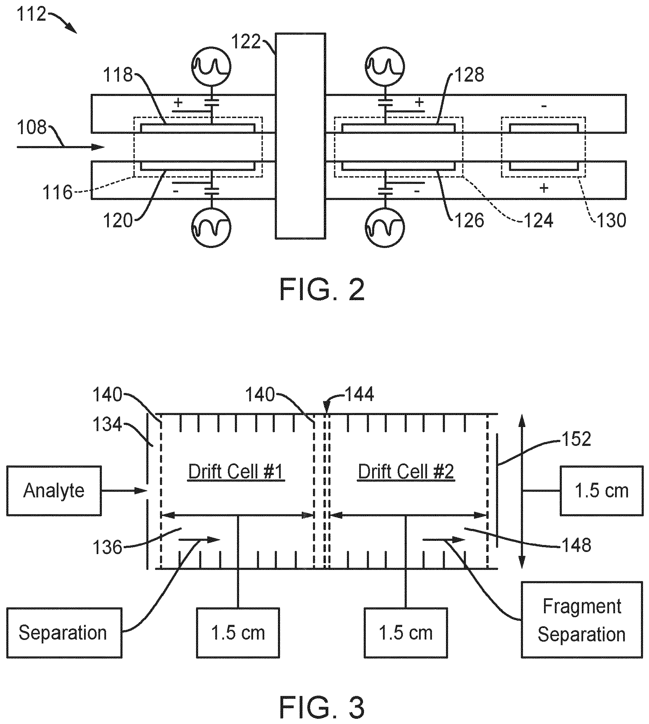

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Figs. 2-4.

In accordance with at least on aspect of this disclosure, as shown in Fig. 1, a system 100 includes a chemical detector 102 including a chemical analyte inlet 104, an ionization module 106 having an ionization source 107 therein fluidly connected to the chemical analyte inlet configured to receive a chemical analyte and ionize the chemical analyte to generate an ionized flow 108, an analytical module 110 fluidly connected to the ionization module 106 to receive the ionized flow 108 and configured to determine a chemical identity of the chemical analyte. The ionization source 107 can be configured to ionize the chemical analyte flowing through ionization region 106. In certain embodiments, the ionization source 107 can include any one or more of an electric-field ionizer, a radioactive ionizer, or a photo-ionizer.

The analytical module 110 includes a differential mobility spectrometer 112 fluidly connected to the chemical analyte inlet 104 and the analytical module 110 can also include an ion mobility spectrometer 114 fluidly connected to the differential mobility spectrometer 112.

As shown in Figs. 1 and 2, the differential mobility spectrometer 112 further includes a first set of electrodes 116 including a first positively charged electrode 118 and a first negatively charged electrode 120 configured to separate positive ions from negative ions within the ionized flow and wherein only ions of a predetermined mobility characteristic flow past the first set of electrodes 116 (e.g., charged plates). A fragmenter 122 is included downstream of the first set of electrodes 116 configured to fragment the filtered sample to further dissociate ions within the filtered sample to generate a fragmented ionized flow with additional ion types having distinctive mobility characteristics.

In certain embodiments, an outlet of the fragmenter can be an outlet of the differential mobility spectrometer 112 such that the fragmented ionized flow forms a first constituent group and passes to the ion mobility spectrometer 114.

In certain embodiments, as shown, the differential mobility spectrometer 112 can include a second set of electrodes 124 (e.g., charged plates) including a second positively charged electrode 126 and a second negatively charged electrode 128 downstream of the fragmenter 122 configured to separate positive ions from negative ions within the fragmented ionized flow and ions of a predetermined mobility flow past the second set of electrodes forming a first constituent group. The first constituent group passes to a detector 130 of the differential mobility spectrometer 112, then the first constituent group passes to the ion mobility spectrometer 114.

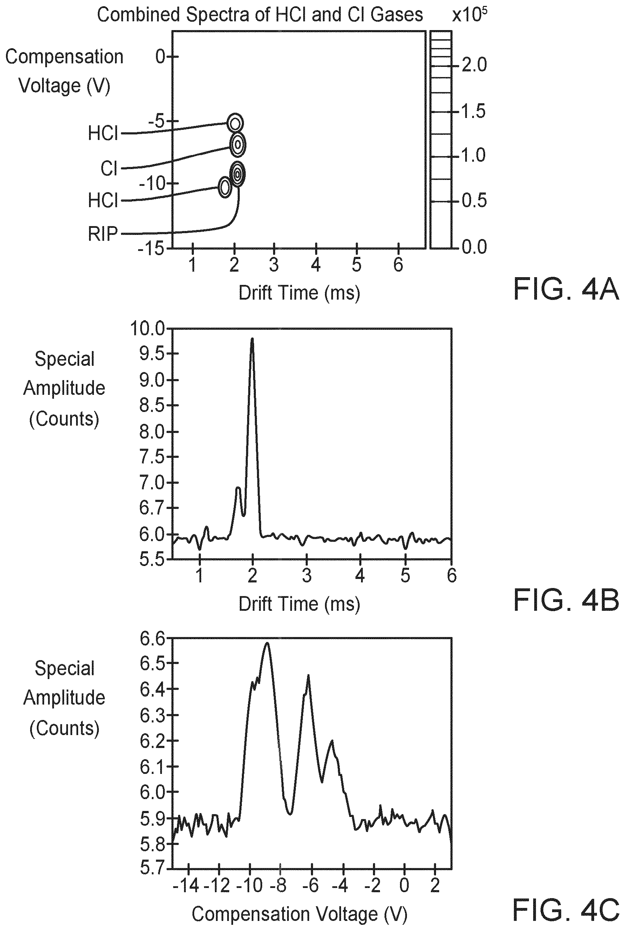

As shown, the differential mobility spectrometer can include a computational module 132 configured to generate a first data set for the first constituent group based on a first analysis characteristic (e.g., a mobility constant which can be determined considering one or more of the following variables for each ion: size, mass, shape, and the ions respective response to atomsphere). An example of the first dataset can be seen in Fig. 4C.

With reference now to Figs. 1 and 3, the ion mobility spectrometer 114 can include a source region 134 configured to receive the first constituent group from the differential mobility spectrometer 112. The ion mobility spectrometer includes first positive ion drift tube 136 and a first negative ion drift tube 138 each fluidly connected to an outlet of the differential mobility spectrometer 112 though the source region 134, wherein the first positive ion drift tube 136 is configured to receive positive ions from the first constituent group and the first negative ion drift tube 138 is configured to receive negative ions from the first constituent group.

The ion mobility spectrometer 114 includes a first shutter 140 at an inlet of the first positive ion drift tube 136 configured to filter the first constituent group entering the first positive ion drift tube 136 based on ion mobility and a second shutter 142 at an inlet of the first negative ion drift tube 138 configured to filter the first constituent group entering the first negative ion drift tube based on ion mobility, wherein the first and second shutter provide selected ions from the first constituent group to the first positive ion drift tube 136 and the first negative ion drift tube 138.

The ion mobility spectrometer 114 also includes a first fragmenter 144 disposed at an outlet of the first positive ion drift tube 136 and a second fragmenter 146 disposed at an outlet of the first negative ion drift tube 138 configured to fragment the selected ions from the first constituent group to further dissociate the selected ions from the first constituent group to generate the second constituent group with additional ion types having distinctive mobility characteristics.

A second positive ion drift tube 148 is fluidly connected to receive fragmented ions from first fragmenter 144 and a second negative ion drift tube 150 is fluidly connected to receive fragmented ions from the second fragmenter 146. The ion mobility spectrometer 114 can further include, a positive ion detector 152 at an end of the second positive ion drift tube 148 configured to draw the positive ions and towards the positive ion detector and configured to detect a time of flight of the positive ions of the second constituent group within the second positive ion drift tube 148. A negative ion detector 154 can be included at an end of the second negative ion drift tube 150 configured to draw the negative ions towards the negative ion detector 154 and configured to detect a time of flight of the negative ions of the second constituent group within the second negative ion drift tube. The ion mobility spectrometer 114 can be configured to function similar to two ion mobility spectrometers connected in series, which is shown schematically in Fig. 3 for just the positive drift.

The analytical module 102 can be configured to determine a drift time of the positive ions of the second constituent group within the second positive ion drift tube 148 and a drift time of the negative ions of the second constituent group in the second negative ion drive tube 150 and generate a second data set for the second constituent group based on the second analysis characteristic (e.g., time of flight of the fragmented ions within the second constituent group). An example of the second dataset can be seen in Fig. 4B.

The analytical module 102 can include a computational module 156 configured to correlate the second dataset generated for the second constituent group with the first dataset generated for the first constituent group, and determine the identity of the chemical analyte based on the correlation between the first dataset and the second data set. An example of the combined and correlated datasets is shown in Fig. 4a.

In accordance with at least one aspect of this disclosure, a method for identifying a chemical composition, for example using the system 100, includes collecting a chemical sample and introducing the chemical sample to a detection system (e.g., system 100). The method further includes ionizing the chemical sample using an ionization source (e.g., module 106 and source 107) to produce an ionized flow (e.g., flow 108) prior to performing differential mobility spectrometry on the chemical sample.

The method includes performing, with a differential mobility spectrometer (e.g., spectrometer 112), differential mobility spectrometry on the chemical sample to separate ions within the chemical sample into a first constituent group based on a first analysis characteristic. The method further includes, performing, with an ion mobility spectrometer (e.g., spectrometer 114), ion mobility spectrometry on the first constituent group to separate ions within the first constituent group into a second constituent group based on a second analysis characteristic. The method can include determining an identity of the chemical sample based on ions present within the second constituent group.

Performing differential mobility spectrometry on the chemical sample can further include, subjecting the ionized flow to a first radio frequency (RF) field to cause ions within the ionized flow to oscillate, and applying a first voltage differential across the first radio frequency field to cause positive ions within the ionized flow to drift towards a negative charge and negative ions to drift towards a positive charge to separate the positive ions from the negative ions within the ionized flow.

Performing differential mobility spectrometry on the chemical sample includes filtering the ions within the ionized flow such that only ions having a desired mobility pass to a fragmenter (e.g., fragmenter 122). The method further includes fragmenting the filtered sample to further dissociate ions within the filtered sample to generate additional ion types having distinctive mobility characteristics, and filtering the ions within the fragmented ionized flow to generate the first constituent group such that only the first constituent group passes to an ion mobility spectrometer of the detection system. In certain embodiments, fragmenting can be accomplished by applying an RF field (different from the first RF field) to the ions within the fragmenter.

In certain embodiments, applying the first voltage differential can include, progressively modifying the first voltage differential to allow selected ions within the ionized flow and/or the fragmented ionized flow to pass into the ion mobility spectrometer as the first constituent group. The method can include, generating a first data set for the first constituent group based on the first analysis characteristic (e.g., as shown in Fig. 4c).

In certain embodiments, performing differential mobility spectrometry on the chemical sample further includes, applying a second voltage differential across a second radio frequency field to cause positive ions within the fragmented ionized flow to drift towards a negative charge and negative ions to drift towards a positive charge to separate the positive ions from the negative ions within the fragmented ionized flow. In certain such embodiments, differential mobility spectrometry can further include filtering the ions within the fragmented ionized flow to generate the first constituent group such that only the first constituent group passes to an ion mobility spectrometer.

Applying the first voltage differential and/or applying the second voltage differential can include progressively modifying the first voltage differential and/or the second voltage differential to allow selected ions within the ionized flow and/or the fragmented ionized flow to pass into the ion mobility spectrometer as the first constituent group, and wherein performing differential mobility spectrometry further comprises, generating a first data set for the first constituent group based on the first analysis characteristic.

Performing ion mobility spectrometry on the first constituent group can further include, passing the ionized flow containing only the first constituent group to an analytical module of the ion mobility spectrometer, and applying a voltage differential across the analytical module to draw positive ions with in the first constituent group to a negative charge of a first analytical module (e.g., in the first positive drift tube 136) of the ion mobility spectrometer and draw the negative ions within the first constituent group to a positive charge of a second analytical module (e.g., in the first negative drift tube 138) of the ion mobility spectrometer.

Performing ion mobility spectrometry on the first constituent group can further include, separating the ions of first continued group in space and performing a first time of flight analysis on the ions within the first constituent group to allow selected ions (e.g., those passing through respective shutters 140, 142) within the first constituent group to pass to a fragmenter (e.g., respective fragmenters 144, 146), and fragmenting the selected ions within the first constituent group to further dissociate and generate additional ion types having distinctive mobility characteristics generating a fragmented flow of ions forming the second constituent group.

Performing ion mobility spectrometry on the first constituent group can further include, performing a second time of flight analysis on the fragmented flow of ions within second constituent group to generate a second data set for the second constituent group based on the second analysis characteristic (e.g., as shown in Fig. 4b). The method includes, correlating the second dataset generated for the second constituent group with the first dataset generated for the first constituent group (e.g., as shown in Fig. 4a) and, determining the identity of the chemical composition based on the correlation between the first dataset and the second data set, which can be performed by a computational module.

One way of performing chemical analysis to identify a chemical is single ion mobility spectrometry. In this method, the first step sends an analyte through an ionization region, for a first ion separation. The second step sends the separated ions through a fragmenter to break apart the ions before further separation. Between the first and second steps, a shutter is included to only allow ions with a predetermined peak height enter the fragmenter. Then, only those ions that enter the fragmenter would be analyzed using time of flight to determine the chemical constituents of the analyte, and ultimately determine the chemical identity of the analyte. In order to separate the ions in the first and second separation steps, a voltage gradient is applied to draw the positive ions through the ionization region, and then reverse the voltage gradient to draw the negative ions through the ionization region. However, this technique can require processing the positive and negative ions separately (which can require more energy) and does not provide great resolution.

An improvement on the ion mobility spectrometry described above includes tandem mobility spectrometry, which allows for processing the positive and negative ions at the same time. In a tandem system, the analyte enters the system and is ionized using an ionization source, e.g., a metal. After ionization, the ions are directed to tandem spectrometers, one having a high negative voltage to analyze positive ions and one to having a high positive voltage to analyze negative ions. Within the respective spectrometers, the identity of the chemical constituents can be identified with higher resolution than the single system described above, but without the added benefit of fragmentation.

Accordingly, the system and method disclosed herein, which can employ a tandem differential mobility spectrometer ("DMS") (e.g, including performing differential mobility spectrometry before and after fragmenting the first constituent group), in conjunction with tandem ion mobility spectrometry ("IMS") (e.g., including performing ion mobility spectrometry before and after fragmenting the second constituent group), can achieve superior capability over certain non-tandem systems. For example, advantages of the claimed system and method can include, at least, the addition of the DMS ion fragmenter facilitates the second level of information available for tandem mobility spectrometry; the combined DMS and IMS data will provide unprecedented resolution to chemical identification by mobility spectrometry (e.g., aiding in differntiong ions with similar K₀ values; and the simple geometry of the fragmenter overcomes the engineering limitations of the ion fragmenter specifically designed for the IMS/IMS system.

As used herein, resolution is used to refer to a capacity to distinguish ions. The system and method disclosed herein provides for a greater analytical resolving power, to get a more robust set of data (e.g., the combined and correlated data set of Fig. 4a). By fragmenting the ions in both tandem systems, the resulting dissociated ions increases the amount of information available to identify the original sample.

## Claims

1. A method for identifying a chemical composition, comprising:
collecting a chemical sample and introducing the chemical sample to a detection system (100);
performing, with a differential mobility spectrometer (112), differential mobility spectrometry on the chemical sample to separate ions within the chemical sample into a first constituent group based on a first analysis characteristic, wherein performing differential mobility spectrometry on the chemical sample further comprises:
filtering the ions within the ionized flow such that only ions having a desired mobility pass to a fragmenter (122);
fragmenting the filtered sample to further dissociate ions within the filtered sample to generate additional ion types having distinctive mobility characteristics;
performing, with an ion mobility spectrometer (114), ion mobility spectrometry on the first constituent group to separate ions within the first constituent group into a second constituent group based on a second analysis characteristic;
determining an identity of the chemical sample based on ions present within the second constituent group;
**characterised by**
filtering, with a first shutter (140) of the ion mobility spectrometer (114) at an inlet of a first positive ion drift tube (136), the first constituent group entering the first positive ion drift tube based on ion mobility;
filtering, with a second shutter (142) of the ion mobility spectrometer (114) at an inlet of a first negative ion drift tube (138), the first constituent group entering the first negative ion drift tube (138) based on ion mobility,
providing, with the first and second shutters (140, 142), selected ions from the first constituent group to the first positive ion drift tube (136) and the first negative ion drift tube (138); and
fragmenting, with a first fragmenter (144) of the ion mobility spectrometer (114) disposed at an outlet of the first positive ion drift tube (136) and a second fragmenter (146) of the ion mobility spectrometer (114) disposed at an outlet of the first negative ion drift tube (138), the selected ions from the first constituent group to further dissociate the selected ions from the first constituent group to generate the second constituent group with additional ion types having distinctive mobility characteristics.

2. The method of claim 1, further comprising, ionizing the chemical sample using an ionization source (107) to produce an ionized flow (108) prior to performing differential mobility spectrometry on the chemical sample, and optionally wherein performing differential mobility spectrometry on the chemical sample further comprises:
subjecting the ionized flow (108) to a first radio frequency field to cause ions within the ionized flow (108) to oscillate; and
applying a first voltage differential across the first radio frequency field to cause positive ions within the ionized flow to drift towards a negative charge and negative ions to drift towards a positive charge to separate the positive ions from the negative ions within the ionized flow (108).

3. The method of claim 2, wherein performing differential mobility spectrometry on the chemical sample further comprises:
filtering the ions within the fragmented ionized flow to generate the first constituent group such that only the first constituent group passes to an ion mobility spectrometer (114) of the detection system,
wherein applying the first voltage differential further includes, progressively modifying the first voltage differential to allow selected ions within the ionized flow and/or the fragmented ionized flow to pass into the ion mobility spectrometer (114) as the first constituent group; and
generating a first data set for the first constituent group based on the first analysis characteristic.

4. The method of claim 2, wherein performing differential mobility spectrometry on the chemical sample further comprises:
applying a second voltage differential across a second radio frequency field to cause positive ions within the fragmented ionized flow to drift towards a negative charge and negative ions to drift towards a positive charge to separate the positive ions from the negative ions within the fragmented ionized flow; and
filtering the ions within the fragmented ionized flow to generate the first constituent group such that only the first constituent group passes to an ion mobility spectrometer (114).

5. The method of claim 4, wherein applying the first voltage differential and/or applying the second voltage differential further includes, progressively modifying the first voltage differential and/or the second voltage differential to allow selected ions within the ionized flow and/or the fragmented ionized flow to pass into the ion mobility spectrometer (114) as the first constituent group;
and wherein performing differential mobility spectrometry further comprises, generating a first data set for the first constituent group based on the first analysis characteristic..

6. The method of claim 5, wherein performing ion mobility spectrometry on the first constituent group further comprises:
passing the ionized flow containing only the first constituent group to an analytical module of the ion mobility spectrometer (114); and
applying a voltage differential across the analytical module to draw positive ions with in the first constituent group to a negative charge of a first analytical module of the ion mobility spectrometer (114)
and draw the negative ions within the first constituent group to a positive charge of a second analytical module of the ion mobility spectrometer (114);
separating the ions of first continued group in space and performing a first time of flight analysis on the ions within the first constituent group to allow selected ions within the first constituent group to pass to a fragmenter; and
fragmenting the selected ions within the first constituent group to further dissociate and generate additional ion types having distinctive mobility characteristics generating a fragmented flow of ions forming the second constituent group, and optionally wherein performing ion mobility spectrometry on the first constituent group further comprises:
performing a second time of flight analysis on the fragmented flow of ions within second constituent group to generate a second data set for the second constituent group based on the second analysis characteristic;
correlating the second dataset generated for the second constituent group with the first dataset generated for the first constituent group; and
determining the identity of the chemical composition based on the correlation between the first dataset and the second data set.

7. A system (100), comprising:
a chemical detector (102) including a chemical analyte inlet (104);
an ionization module (106) having an ionization source (107) therein fluidly connected to the chemical analyte inlet (104) configured to receive the chemical analyte and ionize the chemical analyte to generate an ionized flow; and
an analytical module (110) fluidly connected to the ionization module (106) to receive the ionized flow and configured to determine a chemical identity of the chemical analyte, the analytical module (110) including:
a differential mobility spectrometer (112) fluidly connected to the chemical analyte inlet, wherein the differential mobility spectrometer (112) comprises,
a first set of electrodes (116) including a first positively charged electrode (118) and a first negatively charged electrode (120) configured to separate positive ions from negative ions within the ionized flow and wherein only ions of a predetermined mobility characteristic flow past the first set of electrodes (116); and
a fragmenter (122) downstream of the first set of electrodes (116) configured to fragment the filtered sample to further dissociate ions within the filtered sample to generate a fragmented ionized flow with additional ion types having distinctive mobility characteristics; and
an ion mobility spectrometer (114) fluidly connected to the differential mobility spectrometer (112),
**characterised in that**
the ion mobility spectrometer (114) further comprises:
a first shutter (140) at an inlet of a first positive ion drift tube (136) configured to filter a first constituent group entering the first positive ion drift tube (136) based on ion mobility;
a second shutter (142) at an inlet of a first negative ion drift tube (138) configured to filter the first constituent group entering the first negative ion drift tube (138) based on ion mobility,
wherein the first and second shutter (140,142) provide selected ions from the first constituent group to the first positive ion drift tube (136) and the first negative ion drift tube (138); and
a first fragmenter (144) disposed at an outlet of the first positive ion drift tube (136) and a second fragmenter (146) disposed at an outlet of the first negative ion drift tube (138) configured to fragment the selected ions from the first constituent group to further dissociate the selected ions from the first constituent group to generate the second constituent group with additional ion types having distinctive mobility characteristics.

8. The system of claim 7, wherein the ionization source (107) is configured to ionize the chemical analyte flowing through ionization region, and optionally wherein the ionization source (107) includes an electric-field ionizer, a radioactive ionizer, or a photo-ionizer.

9. The system of claim 7 or 8, wherein an outlet of the fragmenter (122) is an outlet of the differential mobility spectrometer (112) such that the fragmented ionized flow forms the first constituent group and passes to the ion mobility spectrometer (114).

10. The system of claim 7, 8 or 9, wherein the differential mobility spectrometer (112) comprises a second set of electrodes including a second positively charged electrode and a second negatively charged electrode downstream of the fragmenter (122) configured to separate positive ions from negative ions within the fragmented ionized flow and ions of a predetermined mobility flow past the second set of electrodes forming a first constituent group, wherein the first constituent group passes to the ion mobility spectrometer (114).

11. The system of claim 10, wherein the differential mobility spectrometer (112) further comprises a computational module (132) configured to generate a first data set for the first constituent group based on a first analysis characteristic.

12. The system of claim 11, wherein the ion mobility spectrometer (114) comprises:
the first positive ion drift tube (136) and the first negative ion drift tube each fluidly connected to an outlet of the differential mobility spectrometer (112), wherein the first positive ion drift tube is configured to receive positive ions from the first constituent group and the first negative ion drift tube configured to receive negative ions from the first constituent group.

13. The system of claim 9, wherein the ion mobility spectrometer (114) further comprises:
a second positive ion drift tube (148) configured to receive fragmented ions from first fragmenter (144) and a second negative ion drift tube (150) configured to receive fragmented ions from the second fragmenter (146);
a positive ion detector (152) at an end of the second positive ion drift tube (148) configured to draw the positive ions and towards the positive ion detector and configured to detect a time of flight of the positive ions of the second constituent group within the second positive ion drift tube;
a negative ion detector (154) at an end of the second negative ion drift tube (150) configured to draw the negative ions towards the negative ion detector and configured to detect a time of flight of the negative ions of the second constituent group within the second negative ion drift tube.

14. The system of claim 13, wherein the analytical module (102) is configured to determine a drift time of the positive ions of the second constituent group within the second positive ion drift tube (148) and a drift time of the negative ions of the second constituent group in the second negative ion drive tube (150) and generate a second data set for the second constituent group based on the second analysis characteristic.

15. The system of claim 13, wherein the analytical module further comprises a computational module (156) configured to correlate the second dataset generated for the second constituent group with the first dataset generated for the first constituent group; and determine the identity of the chemical analyte based on the correlation between the first dataset and the second data set.

## Patentansprüche

1. Verfahren zum Identifizieren einer chemischen Zusammensetzung, umfassend:
Sammeln einer chemischen Probe und Einführen der chemischen Probe in ein Detektionssystem (100);
Durchführen, mit einem differenziellen Mobilitätsspektrometer (112), von differenzieller Mobilitätsspektrometrie an der chemischen Probe, um Ionen innerhalb der chemischen Probe basierend auf einem ersten Analysemerkmal in eine erste Bestandteilsgruppe zu trennen, wobei das Durchführen von differenzieller Mobilitätsspektrometrie an der chemischen Probe ferner umfasst:
Filtern der Ionen innerhalb des ionisierten Stroms, sodass nur Ionen, die eine gewünschte Mobilität aufweisen, zu einem Fragmentierer (122) gelangen;
Fragmentieren der gefilterten Probe, um Ionen innerhalb der gefilterten Probe weiter zu dissoziieren, um zusätzliche Ionentypen zu generieren, die charakteristische Mobilitätsmerkmale aufweisen;
Durchführen, mit einem Ionenmobilitätsspektrometer (114), von Ionenmobilitätsspektrometrie an der ersten Bestandteilsgruppe, um Ionen innerhalb der ersten Bestandteilsgruppe basierend auf einem zweiten Analysemerkmal in eine zweite Bestandteilsgruppe zu trennen;
Bestimmen einer Identität der chemischen Probe basierend auf Ionen, die innerhalb der zweiten Bestandteilsgruppe vorhanden sind;
**gekennzeichnet durch**
Filtern, mit einem ersten Verschluss (140) des Ionenmobilitätsspektrometers (114) an einem Einlass einer ersten Positiv-Ionen-Driftröhre (136), der ersten Bestandteilsgruppe, die in die erste Positiv-Ionen-Driftröhre eintritt, basierend auf Ionenmobilität;
Filtern, mit einem zweiten Verschluss (142) des Ionenmobilitätsspektrometers (114) an einem Einlass einer ersten Negativ-Ionen-Driftröhre (138), der ersten Bestandteilsgruppe, die in die erste Negativ-Ionen-Driftröhre (138) eintritt, basierend auf Ionenmobilität,
Bereitstellen, mit dem ersten und zweiten Verschluss (140, 142), von ausgewählten Ionen aus der ersten Bestandteilsgruppe an die erste Positiv-Ionen-Driftröhre (136) und die erste Negativ-Ionen-Driftröhre (138); und
Fragmentieren, mit einem ersten Fragmentierer (144) des Ionenmobilitätsspektrometers (114), der an einem Auslass der ersten Positiv-Ionen-Driftröhre (136) angeordnet ist, und einem zweiten Fragmentierer (146) des Ionenmobilitätsspektrometers (114), der an einem Auslass der ersten Negativ-Ionen-Driftröhre (138) angeordnet ist, der ausgewählten Ionen aus der ersten Bestandteilsgruppe, um die ausgewählten Ionen aus der ersten Bestandteilsgruppe weiter zu dissoziieren, um die zweite Bestandteilsgruppe mit zusätzlichen Ionentypen zu generieren, die charakteristische Mobilitätsmerkmale aufweisen.

2. Verfahren nach Anspruch 1, ferner umfassend Ionisieren der chemischen Probe unter Verwendung einer Ionisationsquelle (107), um vor dem Durchführen von differenzieller Mobilitätsspektrometrie an der chemischen Probe einen ionisierten Strom (108) zu produzieren, und wobei optional das Durchführen von differenzieller Mobilitätsspektrometrie an der chemischen Probe ferner umfasst:
Aussetzen des ionisierten Stroms (108) einem ersten Hochfrequenzfeld, um zu bewirken, dass Ionen innerhalb des ionisierten Stroms (108) oszillieren; und
Anlegen einer ersten Spannungsdifferenz über das erste Hochfrequenzfeld, um zu bewirken, dass positive Ionen innerhalb des ionisierten Stroms in Richtung einer negativen Ladung driften und negative Ionen in Richtung einer positiven Ladung driften, um die positiven Ionen von den negativen Ionen innerhalb des ionisierten Stroms (108) zu trennen.

3. Verfahren nach Anspruch 2, wobei das Durchführen von differenzieller Mobilitätsspektrometrie an der chemischen Probe ferner umfasst:
Filtern der Ionen innerhalb des fragmentierten ionisierten Stroms, um die erste Bestandteilsgruppe zu generieren, sodass nur die erste Bestandteilsgruppe zu einem Ionenmobilitätsspektrometer (114) des Detektionssystems gelangt,
wobei das Anlegen der ersten Spannungsdifferenz ferner progressives Modifizieren der ersten Spannungsdifferenz beinhaltet, um zu erlauben, dass ausgewählte Ionen innerhalb des ionisierten Stroms und/oder des fragmentierten ionisierten Stroms als die erste Bestandteilsgruppe in das Ionenmobilitätsspektrometer (114) gelangen; und
Generieren eines ersten Datensatzes für die erste Bestandteilsgruppe basierend auf dem ersten Analysemerkmal.

4. Verfahren nach Anspruch 2, wobei das Durchführen von differenzieller Mobilitätsspektrometrie an der chemischen Probe ferner umfasst:
Anlegen einer zweiten Spannungsdifferenz über ein zweites Hochfrequenzfeld, um zu bewirken, dass positive Ionen innerhalb des fragmentierten ionisierten Stroms in Richtung einer negativen Ladung driften und negative Ionen in Richtung einer positiven Ladung driften, um die positiven Ionen von den negativen Ionen innerhalb des fragmentierten ionisierten Stroms zu trennen; und
Filtern der Ionen innerhalb des fragmentierten ionisierten Stroms, um die erste Bestandteilsgruppe zu generieren, sodass nur die erste Bestandteilsgruppe zu einem Ionenmobilitätsspektrometer (114) gelangt.

5. Verfahren nach Anspruch 4, wobei das Anlegen der ersten Spannungsdifferenz und/oder das Anlegen der zweiten Spannungsdifferenz ferner progressives Modifizieren der ersten Spannungsdifferenz und/oder der zweiten Spannungsdifferenz beinhaltet, um zu erlauben, dass ausgewählte Ionen innerhalb des ionisierten Stroms und/oder des fragmentierten ionisierten Stroms als die erste Bestandteilsgruppe in das Ionenmobilitätsspektrometer (114) gelangen;
und wobei das Durchführen von differenzieller Mobilitätsspektrometrie ferner Generieren eines ersten Datensatzes für die erste Bestandteilsgruppe basierend auf dem ersten Analysemerkmal umfasst.

6. Verfahren nach Anspruch 5, wobei das Durchführen von Ionenmobilitätsspektrometrie an der ersten Bestandteilsgruppe ferner umfasst:
Weiterleiten des ionisierten Stroms, der nur die erste Bestandteilsgruppe enthält, an ein analytisches Modul des Ionenmobilitätsspektrometers (114); und
Anlegen einer Spannungsdifferenz über das analytische Modul, um positive Ionen innerhalb der ersten Bestandteilsgruppe zu einer negativen Ladung eines ersten analytischen Moduls des Ionenmobilitätsspektrometers (114) zu ziehen und die negativen Ionen innerhalb der ersten Bestandteilsgruppe zu einer positiven Ladung eines zweiten analytischen Moduls des Ionenmobilitätsspektrometers (114) zu ziehen;
Trennen der Ionen der ersten Bestandteilsgruppe im Raum und Durchführen einer ersten Flugzeitanalyse an den Ionen innerhalb der ersten Bestandteilsgruppe, um zu erlauben, dass ausgewählte Ionen innerhalb der ersten Bestandteilsgruppe zu einem Fragmentierer gelangen; und
Fragmentieren der ausgewählten Ionen innerhalb der ersten Bestandteilsgruppe, um weiter zu dissoziieren und zusätzliche Ionentypen zu generieren, die charakteristische Mobilitätsmerkmale aufweisen, was einen fragmentierten Strom von Ionen generiert, der die zweite Bestandteilsgruppe bildet, und wobei optional das Durchführen von Ionenmobilitätsspektrometrie an der ersten Bestandteilsgruppe ferner umfasst:
Durchführen einer zweiten Flugzeitanalyse an dem fragmentierten Strom von Ionen innerhalb der zweiten Bestandteilsgruppe, um einen zweiten Datensatz für die zweite Bestandteilsgruppe basierend auf dem zweiten Analysemerkmal zu generieren;
Korrelieren des für die zweite Bestandteilsgruppe generierten zweiten Datensatzes mit dem für die erste Bestandteilsgruppe generierten ersten Datensatz; und
Bestimmen der Identität der chemischen Zusammensetzung basierend auf der Korrelation zwischen dem ersten Datensatz und dem zweiten Datensatz.

7. System (100), umfassend:
einen chemischen Detektor (102), der einen Einlass (104) für einen chemischen Analyten beinhaltet;
ein Ionisationsmodul (106), das darin eine Ionisationsquelle (107) aufweist, die fluidisch mit dem Einlass (104) für den chemischen Analyten verbunden ist und konfiguriert ist, den chemischen Analyten zu empfangen und den chemischen Analyten zu ionisieren, um einen ionisierten Strom zu generieren; und
ein analytisches Modul (110), das fluidisch mit dem Ionisationsmodul (106) verbunden ist, um den ionisierten Strom zu empfangen, und das konfiguriert ist, eine chemische Identität des chemischen Analyten zu bestimmen, wobei das analytische Modul (110) beinhaltet:
ein differenzielles Mobilitätsspektrometer (112), das fluidisch mit dem Einlass für den chemischen Analyten verbunden ist, wobei das differenzielle Mobilitätsspektrometer (112) umfasst,
einen ersten Satz von Elektroden (116), der eine erste positiv geladene Elektrode (118) und eine erste negativ geladene Elektrode (120) beinhaltet, konfiguriert zum Trennen von positiven Ionen von negativen Ionen innerhalb des ionisierten Stroms, und wobei nur Ionen eines vorbestimmten Mobilitätsmerkmals an dem ersten Satz von Elektroden (116) vorbeiströmen; und
einen Fragmentierer (122) stromabwärts von dem ersten Satz von Elektroden (116), der konfiguriert ist, die gefilterte Probe zu fragmentieren, um Ionen innerhalb der gefilterten Probe weiter zu dissoziieren, um einen fragmentierten ionisierten Strom mit zusätzlichen Ionentypen zu generieren, die charakteristische Mobilitätsmerkmale aufweisen; und
ein Ionenmobilitätsspektrometer (114), das fluidisch mit dem differenziellen Mobilitätsspektrometer (112) verbunden ist,
**dadurch gekennzeichnet, dass**
das Ionenmobilitätsspektrometer (114) ferner umfasst:
einen ersten Verschluss (140) an einem Einlass einer ersten Positiv-Ionen-Driftröhre (136), der konfiguriert ist, eine in die erste Positiv-Ionen-Driftröhre (136) eintretende erste Bestandteilsgruppe basierend auf Ionenmobilität zu filtern;
einen zweiten Verschluss (142) an einem Einlass einer ersten Negativ-Ionen-Driftröhre (138), der konfiguriert ist, die in die erste Negativ-Ionen-Driftröhre (138) eintretende erste Bestandteilsgruppe basierend auf Ionenmobilität zu filtern,
wobei der erste und zweite Verschluss (140, 142) ausgewählte Ionen aus der ersten Bestandteilsgruppe an die erste Positiv-Ionen-Driftröhre (136) und die erste Negativ-Ionen-Driftröhre (138) bereitstellen; und
einen ersten Fragmentierer (144), der an einem Auslass der ersten Positiv-Ionen-Driftröhre (136) angeordnet ist, und einen zweiten Fragmentierer (146), der an einem Auslass der ersten Negativ-Ionen-Driftröhre (138) angeordnet ist, konfiguriert zum Fragmentieren der ausgewählten Ionen aus der ersten Bestandteilsgruppe, um die ausgewählten Ionen aus der ersten Bestandteilsgruppe weiter zu dissoziieren, um die zweite Bestandteilsgruppe mit zusätzlichen Ionentypen zu generieren, die charakteristische Mobilitätsmerkmale aufweisen.

8. System nach Anspruch 7, wobei die Ionisationsquelle (107) konfiguriert ist, den durch eine Ionisationsregion strömenden chemischen Analyten zu ionisieren, und wobei optional die Ionisationsquelle (107) einen elektrischen Feldionisator, einen radioaktiven Ionisator oder einen Photoionisator beinhaltet.

9. System nach Anspruch 7 oder 8, wobei ein Auslass des Fragmentierers (122) ein Auslass des differenziellen Mobilitätsspektrometers (112) ist, sodass der fragmentierte ionisierte Strom die erste Bestandteilsgruppe bildet und zu dem Ionenmobilitätsspektrometer (114) gelangt.

10. System nach Anspruch 7, 8 oder 9, wobei das differenzielle Mobilitätsspektrometer (112) einen zweiten Satz von Elektroden umfasst, der eine zweite positiv geladene Elektrode und eine zweite negativ geladene Elektrode stromabwärts von dem Fragmentierer (122) beinhaltet, konfiguriert zum Trennen von positiven Ionen von negativen Ionen innerhalb des fragmentierten ionisierten Stroms, und Ionen einer vorbestimmten Mobilität an dem zweiten Satz von Elektroden vorbeiströmen, wodurch eine erste Bestandteilsgruppe gebildet wird, wobei die erste Bestandteilsgruppe zu dem Ionenmobilitätsspektrometer (114) gelangt.

11. System nach Anspruch 10, wobei das differenzielle Mobilitätsspektrometer (112) ferner ein Rechenmodul (132) umfasst, das konfiguriert ist, einen ersten Datensatz für die erste Bestandteilsgruppe basierend auf einem ersten Analysemerkmal zu generieren.

12. System nach Anspruch 11, wobei das Ionenmobilitätsspektrometer (114) umfasst:
die erste Positiv-Ionen-Driftröhre (136) und die erste Negativ-Ionen-Driftröhre, die jeweils fluidisch mit einem Auslass des differenziellen Mobilitätsspektrometers (112) verbunden sind, wobei die erste Positiv-Ionen-Driftröhre konfiguriert ist, positive Ionen aus der ersten Bestandteilsgruppe zu empfangen, und die erste Negativ-Ionen-Driftröhre konfiguriert ist, negative Ionen aus der ersten Bestandteilsgruppe zu empfangen.

13. System nach Anspruch 9, wobei das Ionenmobilitätsspektrometer (114) ferner umfasst:
eine zweite Positiv-Ionen-Driftröhre (148), die konfiguriert ist, fragmentierte Ionen von dem ersten Fragmentierer (144) zu empfangen, und eine zweite Negativ-Ionen-Driftröhre (150), die konfiguriert ist, fragmentierte Ionen von dem zweiten Fragmentierer (146) zu empfangen;
einen Positiv-Ionen-Detektor (152) an einem Ende der zweiten Positiv-Ionen-Driftröhre (148), der konfiguriert ist, die positiven Ionen in Richtung des Positiv-Ionen-Detektors zu ziehen, und der konfiguriert ist, eine Flugzeit der positiven Ionen der zweiten Bestandteilsgruppe innerhalb der zweiten Positiv-Ionen-Driftröhre zu detektieren;
einen Negativ-Ionen-Detektor (154) an einem Ende der zweiten Negativ-Ionen-Driftröhre (150), der konfiguriert ist, die negativen Ionen in Richtung des Negativ-Ionen-Detektors zu ziehen, und der konfiguriert ist, eine Flugzeit der negativen Ionen der zweiten Bestandteilsgruppe innerhalb der zweiten Negativ-Ionen-Driftröhre zu detektieren.

14. System nach Anspruch 13, wobei das analytische Modul (102) konfiguriert ist, eine Driftzeit der positiven Ionen der zweiten Bestandteilsgruppe innerhalb der zweiten Positiv-Ionen-Driftröhre (148) und eine Driftzeit der negativen Ionen der zweiten Bestandteilsgruppe in der zweiten Negativ-Ionen-Driftröhre (150) zu bestimmen und einen zweiten Datensatz für die zweite Bestandteilsgruppe basierend auf dem zweiten Analysemerkmal zu generieren.

15. System nach Anspruch 13, wobei das analytische Modul ferner ein Rechenmodul (156) umfasst, das konfiguriert ist, den für die zweite Bestandteilsgruppe generierten zweiten Datensatz mit dem für die erste Bestandteilsgruppe generierten ersten Datensatz zu korrelieren; und die Identität des chemischen Analyten basierend auf der Korrelation zwischen dem ersten Datensatz und dem zweiten Datensatz zu bestimmen.

## Revendications

1. Procédé pour l'identification d'une composition chimique, comprenant :
le prélèvement d'un échantillon chimique et l'introduction de l'échantillon chimique dans un système de détection (100) ;
la réalisation, à l'aide d'un spectromètre de mobilité différentielle (112), d'une spectrométrie de mobilité différentielle sur l'échantillon chimique pour séparer les ions au sein de l'échantillon chimique en un premier groupe constituant sur la base d'une première caractéristique d'analyse, dans lequel la réalisation d'une spectrométrie de mobilité différentielle sur l'échantillon chimique comprend en outre :
le filtrage des ions au sein du flux ionisé de telle sorte que seuls des ions ayant une mobilité souhaitée passent vers un dispositif de fragmentation (122) ;
la fragmentation de l'échantillon filtré pour dissocier davantage des ions au sein de l'échantillon filtré pour générer des types d'ions supplémentaires ayant des caractéristiques de mobilité distinctives ;
la réalisation, avec un spectromètre de mobilité ionique (114), d'une spectrométrie de mobilité ionique sur le premier groupe constituant pour séparer des ions au sein du premier groupe constituant en un second groupe constituant sur la base d'une seconde caractéristique d'analyse ;
la détermination d'une identité de l'échantillon chimique sur la base des ions présents au sein du second groupe constituant ; **caractérisé par**
la filtrage, avec un premier obturateur (140) du spectromètre de mobilité ionique (114) au niveau d'une entrée d'un premier tube de dérive d'ions positifs (136), du premier groupe constituant entrant dans le premier tube de dérive d'ions positifs sur la base de la mobilité ionique ;
la filtrage, avec un second obturateur (142) du spectromètre de mobilité ionique (114) au niveau d'une entrée d'un premier tube de dérive d'ions négatifs (138), du premier groupe constituant entrant dans le premier tube de dérive d'ions négatifs (138) sur la base de la mobilité ionique,
la fourniture, grâce aux premier et second obturateurs (140, 142), d'ions sélectionnés du premier groupe constituant au premier tube de dérive d'ions positifs (136) et au premier tube de dérive d'ions négatifs (138) ; et
la fragmentation, avec un premier dispositif de fragmentation (144) du spectromètre de mobilité ionique (114) disposé au niveau d'une sortie du premier tube de dérive d'ions positifs (136) et un second dispositif de fragmentation (146) du spectromètre de mobilité ionique (114) disposé au niveau d'une sortie du premier tube de dérive d'ions négatifs (138), des ions sélectionnés du premier groupe constituant pour dissocier davantage les ions sélectionnés du premier groupe constituant afin de générer le second groupe constituant avec des types d'ions supplémentaires ayant des caractéristiques de mobilité distinctives.

2. Procédé selon la revendication 1, comprenant en outre l'ionisation de l'échantillon chimique à l'aide d'une source d'ionisation (107) pour produire un flux ionisé (108) avant la réalisation d'une spectrométrie de mobilité différentielle sur l'échantillon chimique, et, éventuellement dans lequel la réalisation d'une spectrométrie de mobilité différentielle sur l'échantillon chimique comprend en outre :
la soumission du flux ionisé (108) à un premier champ de radiofréquence pour provoquer l'oscillation des ions au sein du flux ionisé (108) ; et
l'application d'un premier différentiel de tension à travers le premier champ de radiofréquence pour faire dériver des ions positifs au sein du flux ionisé vers une charge négative et des ions négatifs vers une charge positive pour séparer les ions positifs des ions négatifs au sein du flux ionisé (108).

3. Procédé selon la revendication 2, dans lequel la réalisation d'une spectrométrie de mobilité différentielle sur l'échantillon chimique comprend en outre :
le filtrage des ions au sein du flux ionisé fragmenté pour générer le premier groupe constituant de telle sorte que seul le premier groupe constituant passe vers un spectromètre de mobilité ionique (114) du système de détection,
dans lequel l'application du premier différentiel de tension comporte en outre la modification progressive du premier différentiel de tension pour permettre à des ions sélectionnés au sein du flux ionisé et/ou du flux ionisé fragmenté de passer dans le spectromètre de mobilité ionique (114) en tant que premier groupe constituant ; et
la génération d'un premier ensemble de données pour le premier groupe constituant sur la base de la première caractéristique d'analyse.

4. Procédé selon la revendication 2, dans lequel la réalisation d'une spectrométrie de mobilité différentielle sur l'échantillon chimique comprend en outre :
l'application d'un second différentiel de tension à travers un second champ de radiofréquence pour faire dériver des ions positifs au sein du flux ionisé fragmenté vers une charge négative et des ions négatifs vers une charge positive pour séparer les ions positifs des ions négatifs au sein du flux ionisé fragmenté ; et
le filtrage des ions au sein du flux ionisé fragmenté pour générer le premier groupe constituant de telle sorte que seul le premier groupe constituant passe vers un spectromètre de mobilité ionique (114).

5. Procédé selon la revendication 4, dans lequel l'application du premier différentiel de tension et/ou l'application du second différentiel de tension comporte en outre la modification progressive du premier différentiel de tension et/ou du second différentiel de tension pour permettre à des ions sélectionnés au sein du flux ionisé et/ou du flux ionisé fragmenté de passer dans le spectromètre de mobilité ionique (114) en tant que premier groupe constituant ;
et dans lequel la réalisation de la spectrométrie de mobilité différentielle comprend en outre la génération d'un premier ensemble de données pour le premier groupe constituant, sur la base de la première caractéristique d'analyse.

6. Procédé selon la revendication 5, dans lequel la réalisation d'une spectrométrie de mobilité ionique sur le premier groupe constituant comprend en outre :
le passage du flux ionisé contenant uniquement le premier groupe constituant vers un module analytique du spectromètre de mobilité ionique (114) ; et
l'application d'un différentiel de tension à travers le module analytique pour attirer des ions positifs au sein du premier groupe constituant vers une charge négative d'un premier module analytique du spectromètre de mobilité ionique (114) et attirer les ions négatifs au sein du premier groupe constituant vers une charge positive d'un second module analytique du spectromètre de mobilité ionique (114) ;
la séparation des ions du premier groupe continu dans l'espace et la réalisation d'une première analyse du temps de vol sur les ions au sein du premier groupe constituant afin de permettre à des ions sélectionnés au sein du premier groupe constituant de passer dans un dispositif de fragmentation ; et
la fragmentation des ions sélectionnés au sein du premier groupe constituant afin de les dissocier davantage et de générer des types d'ions supplémentaires ayant des caractéristiques de mobilité distinctes, générant ainsi un flux fragmenté d'ions formant le second groupe constituant, et, éventuellement dans lequel la réalisation d'une spectrométrie de mobilité ionique sur le premier groupe constituant comprend en outre :
la réalisation d'une seconde analyse du temps de vol sur le flux fragmenté d'ions au sein du second groupe constituant afin de générer un second ensemble de données pour le second groupe constituant sur la base de la seconde caractéristique d'analyse ;
la corrélation du second ensemble de données généré pour le second groupe constituant avec le premier ensemble de données généré pour le premier groupe constituant ; et
la détermination de l'identité de la composition chimique sur la base de la corrélation entre le premier ensemble de données et le second ensemble de données.

7. Système (100), comprenant :
un détecteur chimique (102) comportant une entrée d'analyte chimique (104) ;
un module d'ionisation (106) ayant une source d'ionisation (107) en son sein reliée fluidiquement à l'entrée d'analyte chimique (104) configurée pour recevoir l'analyte chimique et ioniser l'analyte chimique afin de générer un flux ionisé ; et
un module analytique (110) relié fluidiquement au module d'ionisation (106) pour recevoir le flux ionisé et configuré pour déterminer une identité chimique de l'analyte chimique, le module analytique (110) comportant :
un spectromètre de mobilité différentielle (112) relié fluidiquement à l'entrée d'analyte chimique, dans lequel le spectromètre de mobilité différentielle (112) comprend,
un premier ensemble d'électrodes (116) comportant une première électrode chargée positivement (118) et une première électrode chargée négativement (120) configurées pour séparer des ions positifs d'ions négatifs au sein du flux ionisé et dans lequel seuls des ions d'une caractéristique de mobilité prédéterminée passent devant le premier ensemble d'électrodes (116) ; et
un dispositif de fragmentation (122) en aval du premier ensemble d'électrodes (116) configuré pour fragmenter l'échantillon filtré afin de dissocier davantage des ions au sein de l'échantillon filtré pour générer un flux ionisé fragmenté avec des types d'ions supplémentaires ayant des caractéristiques de mobilité distinctives ; et
un spectromètre de mobilité ionique (114) relié fluidiquement au spectromètre de mobilité différentielle (112),
**caractérisé en ce que**
le spectromètre de mobilité ionique (114) comprend en outre:
un premier obturateur (140) au niveau d'une entrée d'un premier tube de dérive d'ions positifs (136) configuré pour filtrer un premier groupe constituant entrant dans le premier tube de dérive d'ions positifs (136) sur la base de la mobilité ionique ;
un second obturateur (142) au niveau d'une entrée d'un premier tube de dérive d'ions négatifs (138) configuré pour filtrer le premier groupe constituant entrant dans le premier tube de dérive d'ions négatifs (138) sur la base de la mobilité ionique, dans lequel les premier et second obturateurs (140, 142) fournissent des ions sélectionnés du premier groupe constituant au premier tube de dérive d'ions positifs (136) et au premier tube de dérive d'ions négatifs (138) ; et
un premier dispositif de fragmentation (144) disposé au niveau d'une sortie du premier tube de dérive d'ions positifs (136) et un second dispositif de fragmentation (146) disposé au niveau d'une sortie du premier tube de dérive d'ions négatifs (138) configurés pour fragmenter les ions sélectionnés du premier groupe constituant pour dissocier davantage les ions sélectionnés du premier groupe constituant afin de générer le second groupe constituant avec des types d'ions supplémentaires ayant des caractéristiques de mobilité distinctives.

8. Système selon la revendication 7, dans lequel la source d'ionisation (107) est configurée pour ioniser l'analyte chimique passant à travers la région d'ionisation, et dans lequel éventuellement la source d'ionisation (107) comporte un ioniseur à champ électrique, un ioniseur radioactif ou un photo-ioniseur.

9. Système selon la revendication 7 ou 8, dans lequel une sortie du dispositif de fragmentation (122) est une sortie du spectromètre de mobilité différentielle (112) de telle sorte que le flux ionisé fragmenté forme le premier groupe constituant et passe au spectromètre de mobilité ionique (114).

10. Système selon la revendication 7, 8 ou 9, dans lequel le spectromètre de mobilité différentielle (112) comprend un second ensemble d'électrodes comportant une seconde électrode chargée positivement et une seconde électrode chargée négativement en aval du dispositif de fragmentation (122) configurées pour séparer des ions positifs d'ions négatifs au sein du flux ionisé fragmenté et des ions d'une mobilité prédéterminée passent devant le second ensemble d'électrodes formant un premier groupe constituant, dans lequel le premier groupe constituant passe au spectromètre de mobilité ionique (114).

11. Système selon la revendication 10, dans lequel le spectromètre de mobilité différentielle (112) comprend en outre un module de calcul (132) configuré pour générer un premier ensemble de données pour le premier groupe constituant sur la base d'une première caractéristique d'analyse.

12. Système selon la revendication 11, dans lequel le spectromètre de mobilité ionique (114) comprend :
le premier tube de dérive d'ions positifs (136) et le premier tube de dérive d'ions négatifs chacun relié fluidiquement à une sortie du spectromètre de mobilité différentielle (112), dans lequel le premier tube de dérive d'ions positifs est configuré pour recevoir des ions positifs du premier groupe constituant et le premier tube de dérive d'ions négatifs est configuré pour recevoir des ions négatifs du premier groupe constituant.

13. Système selon la revendication 9, dans lequel le spectromètre de mobilité ionique (114) comprend en outre :
un second tube de dérive d'ions positifs (148) configuré pour recevoir des ions fragmentés du premier dispositif de fragmentation (144) et un second tube de dérive d'ions négatifs (150) configuré pour recevoir des ions fragmentés du second dispositif de fragmentation (146) ;
un détecteur d'ions positifs (152) au niveau d'une extrémité du second tube de dérive d'ions positifs (148) configuré pour attirer les ions positifs vers le détecteur d'ions positifs et configuré pour détecter un temps de vol des ions positifs du second groupe constituant au sein du second tube de dérive d'ions positifs ;
un détecteur d'ions négatifs (154) au niveau d'une extrémité du second tube de dérive d'ions négatifs (150) configuré pour attirer les ions négatifs vers le détecteur d'ions négatifs et configuré pour détecter un temps de vol des ions négatifs du second groupe constituant dans le second tube de dérive d'ions négatifs.

14. Système selon la revendication 13, dans lequel le module analytique (102) est configuré pour déterminer un temps de dérive des ions positifs du second groupe constituant dans le second tube de dérive d'ions positifs (148) et un temps de dérive des ions négatifs du second groupe constituant dans le second tube d'entraînement d'ions négatifs (150) et générer un second ensemble de données pour le second groupe constituant sur la base de la seconde caractéristique d'analyse.

15. Système selon la revendication 13, dans lequel le module analytique comprend en outre un module de calcul (156) configuré pour corréler le second ensemble de données généré pour le second groupe constituant avec le premier ensemble de données généré pour le premier groupe constituant ; et déterminer l'identité de l'analyte chimique sur la base de la corrélation entre le premier ensemble de données et le second ensemble de données.
